(19) Europäisches Patentamt
European Patent Office
Office européen des brevets

(11) **EP 2 643 720 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(21) Anmeldenummer: **11785345.7**

(22) Anmeldetag: **18.11.2011**

(51) Int Cl.:
**G02B 6/06** *(2006.01)*   **C03B 37/028** *(2006.01)*

(86) Internationale Anmeldenummer:
**PCT/EP2011/005814**

(87) Internationale Veröffentlichungsnummer:
**WO 2012/069162 (31.05.2012 Gazette 2012/22)**

(54) **FASEROPTISCHER BILDLEITER**

FIBER-OPTIC IMAGE CONDUCTOR COMPRISING MULTIFACETED RODS

GUIDE D'IMAGES À FIBRE OPTIQUE COMPRENANT DES BARRES POLYÉDRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2010 DE 102010052479**

(43) Veröffentlichungstag der Anmeldung:
**02.10.2013 Patentblatt 2013/40**

(73) Patentinhaber: **Schott AG**
**55122 Mainz (DE)**

(72) Erfinder: **RUßERT, Hubertus**
**65321 Heidenrod (DE)**

(74) Vertreter: **Blumbach · Zinngrebe Patent- und Rechtsanwälte**
**PartG mbB**
**Alexandrastraße 5**
**65187 Wiesbaden (DE)**

(56) Entgegenhaltungen:
**GB-A- 1 317 837    JP-A- 3 177 329**
**JP-A- 56 167 109   JP-A- 62 056 332**
**JP-A- 62 162 633   JP-A- 63 021 231**

**Beschreibung**

Die Erfindung betrifft eine optische Vorrichtung zur Übertragung von elektromagnetischen Wellen vorzugsweise im Bereich von 200 nm bis 2 $\mu$m und ein Verfahren zu deren Herstellung auf Basis von faseroptischen Lichtleitstäben sowie die Verwendungen von nach diesem Verfahren hergestellten Bauteilen.

Faseroptische Bildleiter, die im allgemeinen aus einer Vielzahl einzelner lichtleitender Glasfasern - im folgenden Lichtleitstäbe genannt - bestehen, sind durch ihre Verwendung etwa im Bereich der optischen Bildübertragung in Endoskopen für dentaltechnischen Anwendungen bekannt. Für Bildübertragungen werden Lichtleitstäbe in genau paralleler Anordnung über die gesamte Länge miteinander verbunden.

Ein über die Eingangsfläche eingespeistes Bild wird durch die einzelnen Lichtleitstäbe zerlegt und zum anderen Ende übertragen, wo das Bild rasterförmig wieder zusammengesetzt wird. Bei Faserstäben sind die Lichtleitstäbe in der ganzen Länge miteinander parallel verschmolzen. Jeder einzelne Lichtleitstab des Faserstabes entspricht einem Bildübertragungspunkt bzw. einem Pixel, wobei die im Faserstab zusammengefassten Lichtleitstäbe im wesentlichen die optischen Eigenschaften der einzelnen Lichtleitstäbe aufweisen.

Faseroptische Bildleiter in der Medizintechnik bestehen etwa aus mehreren Tausend einzelnen Lichtleitstäben, wobei die einzelnen Lichtleitstäbe einen Durchmesser von 2 bis 20 $\mu$m aufweisen.

Unter hochauflösend im Sinne der Erfindung sollen Bildleiter verstanden werden, bei denen die einzelnen Lichtleitstäbe des Faserstabes einen Durchmesser von weniger als 100 $\mu$m aufweisen.

Die Herstellung derartiger hochauflösender faseroptischer Bildleiter erweist sich als aufwendig, da Lichtleitstäbe gleicher Länge in eine parallele Anordnung gebracht und gebündelt werden müssen. Eine nicht optimale Anordnung bedeutet zum einen, dass das Bündel nicht vollständig mit Lichtleitstäben bestückt werden kann und dadurch Hohlräume entstehen. Zum anderen kann es zu Vertauschungen von Bildinformationen kommen, wenn der Ordnungszustand der einzelnen Lichtleitstäbe auf beiden Seiten des Faserstabes nicht gleich ist. In der Folge sinkt die Qualität der Bildübertragung.

DE 102009004159A1 beschreibt ein mögliches Verfahren zur Herstellung von parallelen Bündeln und weist darauf hin, dass die Erzeugung etwa eines Bündels mit einer typischen Anzahl von 1000 Lichtleitstäben sehr aufwendig ist.

Hierzu stellt DE 102009004159A1 ein Verfahren vor, bei dem Lichtleitstäbe in ein Hüllrohr eingesetzt werden und zunächst eine zufällige Anordnung innehaben, die nicht einem Zustand mit optimaler Anordnung entspricht. Unter optimaler Anordnung ist zu verstehen, dass sämtliche Lichtleitstäbe parallel angeordnet sind.

Mittels Rüttelbewegung des Hüllrohrs werden die Lichtleitstäbe in einen Zustand höherer Ordnung versetzt, da die Lichtleitstäbe dazu tendieren, energieärmere Zustände einzunehmen und somit Lücken durch Selbstorganisation zu füllen. Durch diesen Verdichtungsprozeß entstehende Hohlräume in dem Hüllrohr werden anschließend mit weiteren Lichtleitstäben gefüllt.

Durch ein mehrfaches Wiederholen der Prozessschritte Rütteln und Nachfüllen kann so die Packungsdichte erhöht werden. Die Packungsdichte gibt im allgemeinen den Volumenanteil des Hüllrohrs an, der mit bestimmten Körpern, in diesem Fall mit Lichtleitstäben, ausgefüllt ist.

Als Alternative hierzu sieht DE 102009004159A1 die sehr aufwendige Möglichkeit vor, die Lichtleitstäbe einzeln manuell in einer Form oder Vorrichtung anzuordnen. Auf diese Weise können die Lichtleitstäbe optimal geordnet werden, wodurch eine hohe Packungsdichte erreicht werden kann.

Eine Alternative bietet die DE 10059371A1, wobei hier von einem optischen Bildleiter mit nicht parallel angeordneten Lichtleitstäben ausgegangen wird. Um dennoch ein mit dem Eingangsbild übereinstimmendes Ausgangsbild zu erhalten, wird eine Matrixkamera mit Bildsensoren eingesetzt und eine Zuordnung der Objektpunkte zu den Bildpunkten mittels eines Kalibrierungsprozesses ermittelt. Der Bildaufbau - etwa an einem Monitor - erfolgt anschließend auf Basis der ermittelten Zuordnungsvorschrift.

Die bestmögliche Qualität der Bildübertragung wird in der Regel erreicht, wenn sämtliche Lichtleitstäbe parallel angeordnet sind und damit ein höchstmöglicher Ordnungszustand hergestellt ist. Zudem soll die Packungsdichte möglichst hoch sein, um eine feine Rasterung des zu übertragenen Bildes zu erreichen. Schließlich ist für eine hochwertige Bildübertragung eine hohe Auflösung erforderlich, die sich aus der Größe der einzelnen Lichtleitstäbe im Faserstab ergibt.

Die bekannten Verfahren zur Herstellung faseroptischer Bildleiter weisen entweder den Nachteil auf, sich aufgrund einer nicht-parallelen Anordnung der einzelnen Lichtleitstäbe einer Zusatzvorrichtung bedienen zu müssen, um das Eingangsbild gemäß einer Zuordnungsvorschrift umzuwandeln und auf der Ausgangsseite darstellen zu können.

Andernfalls müssen sämtliche Lichtleitstäbe des Bildleiters in einen Zustand paralleler Ordnung gebracht werden. Dieses erweist sich als sehr aufwendig, wenn beispielsweise eine optische Vorrichtung aus mehreren Tausend Lichtleitstäben besteht und eine hohe Auflösung angestrebt wird.

Der beschriebene Rüttelprozeß vermag es, einen vergleichsweise hohen Ordnungszustand der Lichtleitstäbe herzustellen. Es ist allerdings nicht sichergestellt, dass der Zustand der höchsten Ordnung der Lichtleitstäbe in jedem Fall erreicht werden kann.

Zudem ist neben dem hohen Ordnungszustand der Lichtleitstäbe auch eine hohe Packungsdichte erforderlich. Durch das im Stand der Technik beschriebene Verfahren ist dies nicht sichergestellt. DE 102009004159A1 beschreibt etwa eine erreichbare Packungsdichte von 90%.

Die Packungsdichte hängt insbesondere auch von der Größe der eingebrachten Lichtleitstäbe in Relation zu dem Hüllsystem ab. Beispielsweise können wenige Lichtleitstäbe großen Durchmessers relativ einfach parallel ausgerichtet werden. Es ist allerdings nicht sichergestellt, dass dieses Bündel das Hüllsystem gut ausfüllt. In diesem Fall kann zwar ein hoher Ordnungszustand erreicht werden, die Packungsdichte ist aber zu gering.

Diese Nachteile hat der Erfinder erkannt und sich der Aufgabe angenommen, ein einfaches Verfahren zur Herstellung einer faseroptischen Vorrichtung zu entwickeln, mit der elektromagnetische Strahlen im Bereich von 200 nm bis 2 μm übertragen werden können.

Diese optische Vorrichtung soll insbesondere eine hohe optische Auflösung aufweisen, bei der die Lichtleitstäbe einen Durchmesser von weniger als 100 Mikrometern sowie die Faserstäbe eine Packungsdichte im Bereich von mindestens 98 %, besonders bevorzugt von mindestens 99% aufweisen.

Erfindungsgemäß werden die Lichtleitstäbe derart ausgewählt und hergestellt, dass sich aufgrund deren Anzahl und deren Außendurchmesser in Bezug auf eine umgebende Hülle eine sehr hohe Packungsdichte einstellt oder einstellen läßt.

Der Außendurchmesser D1 der verwendeten Lichtleitstäbe wird hierfür nach folgender Regel ausgewählt:

$$D1 = (D2-s) / (2 \cdot n+1)$$

Mit D1: Außendurchmesser des Einzel-Faserstabes
D2: Innendurchmesser des Hüllrohrs
n: Ordnung, n = 1, 2, 3, ...
s: Übermaß des Hüllsystems (typischerweise ca. 1mm)

Die optimale Anzahl N der in die Hülle einzusetzenden Lichtleitstäbe ergibt sich gemäß vorliegender Erfindung aus folgender Regel:

$$N = 1 + 3 \cdot ((n+1)!/(n-1)!)$$

Durch dieses Verfahren wird in optimaler Weise das Ausbilden einer hexagonalen Außengeometrie der Lichtleitstäbe in einem nachfolgenden Prozeßschritt begünstigt. Die Packungsdichte der Hülle liegt in diesem Fall im Bereich von 60%.

Zum Zusammenhalten des Bündels können die Lichtleitstäbe in eine umgebende Hülle aus Glas eingesetzt werden, wobei diese Hülle durch nachfolgende Prozesse dann ebenfalls Bestandteil der Vorrichtung wird. Die Hülle kann dabei beispielsweise rohrförmig ausgebildet sein. Das Sammelbündel kann auch mit Klammern oder Hilfsvorrichtungen zusammengehalten werden, die dann später nicht Bestandteil der Vorrichtung werden.

Die auf diese Weise gebündelten Lichtleitstäbe werden nachfolgend einem Ziehprozeß in einem Ringofen zugeführt, wobei durch Hinzufügen von Temperatur das ursprünglich lose System fest zu einem mechanisch homogenen Faserstab verschmolzen wird.

Aufgrund der erfindungsgemäßen Bündelung der Lichtleitstäbe entsteht durch den Ziehprozeß ein Faserstab, der eine Packungsdichte im Bereich von 99% aufweist. Dies wird erreicht durch eine Verformung der Außenkontur der Lichtleitstäbe, wobei die einzelnen Lichtleitstäbe im wesentlichen eine hexagonale Außenkontur annehmen. Diese Verformung tritt umso stärker auf, je dichter die Lichtleitstäbe zum Zentrum des Faserstabes hin angeordnet sind. Durch die Veränderung der Außenkontur reduzieren sich Hohlräume zwischen den Lichtleitstäben, wodurch die Packungsdichte ansteigt.

Zudem hat sich herausgestellt, dass bei einer derartigen Konfiguration auch der Faserstab selbst eine annähernd hexagonale Außenkontur annimmt, insbesondere auch, wenn die Hülle ursprünglich einen rohrförmigen Querschnitt aufweist. Die erfindungsgemäß hergestellten Faserstäbe können nach oben beschriebener Methodik erneut zu einem Sammelbündel bestehend aus Faserstäben gleicher Länge zusammengefasst werden. Hierbei führt die annähernd hexagonale Außenkontur der Faserstäbe dazu, dass sich bei Erzeugung eines Sammelbündels aus hexagonalen Faserstäben bereits in der Hülle eine sehr hohe Packungsdichte einstellt, die im Bereich von 98% und besonders bevorzugt im Bereich von größer als 99% liegt.

Nach Durchlaufen eines weiteren nachfolgenden Ziehprozesses können somit Multi-Faserstäbe hergestellt werden, die eine Packungsdichte im Bereich von wenigstens 99% oder darüber aufweisen.

In einer besonderen Ausführungsform wird dieser nachfolgende Ziehprozeß im wesentlichen zur Herstellung eines mechanisch stabilen Gebildes aus Faserstäben eingesetzt, wodurch der Multi-Faserstab sodann geeignet für verschiedene Weiterverarbeitungsprozesse ist. Zu den Weiterverarbeitungsprozessen des Multi-Faserstabes gehören beispielsweise das Biegen, das Ziehen, das Stauchen oder auch das Tordieren.

Das hier vorgestellte Verfahren vermeidet daher sowohl den Nachteil, sämtliche Lichtleitstäbe eines Faserstabes einzeln manuell anordnen zu müssen, als auch den Nachteil eines Verlustes an Übertragungsqualität durch eine geringe Packungsdichte.

Aufgrund der sehr hohen Packungsdichte des Sammelbündels bestehend aus annähernd hexagonalen Faserstäben befinden sich nur noch wenige Restlücken in dem Bündel. Hieraus ergibt sich nach dem erfindungsgemäßen Verfahren ein weiterer Vorteil.

Wird ein Sammelbündel der Faserstäbe einem Ziehprozeß zugeführt, kann mit einem vergleichsweise kleinen Ziehverhältnissen gearbeitet werden, da die Packungsdichte bereits sehr hoch ist und durch den Ziehprozeß eine weitere deutliche Erhöhung nicht zwingend erforderlich wird. Aufgrund dieses nur geringen Ziehverhältnisses bzw. des geringen erforderlichen Umformverhältnisses können in einer weiteren besonderen Ausführungsform anstelle des Ziehverfahrens auch andere formgebende Verfahren, beispielsweise das Pressen oder Kollabieren im Vakuum. Vorteilhaft wird eine Optische Vorrichtung, insbesondere ein hochauflösender faseroptischer Bildleiter, zur Übertragung von elektromagnetischer Strahlung im Wellenlängenbereich von 200 nm bis 2 $\mu$m, bereitgestellt, welcher Lichtleitstäbe mit annähernd hexagonalen Außenkonturen umfaßt, die durch einen oder mehrere Ziehvorgänge aus gebündelten Lichtleitstäben hergestellt worden sind und eine Packungsdichte von mindestens 98% sowie eine Auflösung von kleiner als einem Millimeter, vorzugsweise von kleiner als 100 $\mu$m aufweisen.

Unter optischer Auflösung im Sinne der Erfindung ist der Durchmesser eines einzelnen Lichtleitstabes der Optischen Vorrichtung zu verstehen, der die Feinheit der Rasterung des zu übertragenden Bildes bestimmt. Als hochauflösend werden gemäß der vorliegenden Erfindung faseroptische Bildleiter verstanden, bei denen der einzelne Lichtleitstab des faseroptischen Bildleiters einen Durchmesser von weniger als 100 $\mu$m aufweist.

Hierdurch wird eine Vorrichtung zur Bildübertragung zur Verfügung gestellt, die eine sehr feine Rasterung des zu übertragenden Bildes ermöglicht und damit geeignet ist für eine Bildübertragung, bei der sehr hohe Anforderungen an die Detaillierung bestehen.

Besonders vorteilhaft wird eine Optische Vorrichtung realisiert, bei welcher die Bündel der Lichtleitstäbe N einzelne Lichtleitstäbe umfassen mit

$$N = 1 + 3 \cdot ((n+1)!/(n-1)!)$$

mit n: Ordnung, n = 2, 3, ...

und wobei nach dem Ziehvorgang ein Faserstab entsteht, da hierdurch eine sehr hohe Packungsdichte des Faserstabes erreicht werden kann, die insbesondere mindestens 98% beträgt.

Die gebündelten Lichtleitstäbe werden durch eine rohrförmige Umhüllung eingefasst, so dass sie einfach zu halten sind und insbesondere in einem nachfolgenden Ziehprozeß, welcher bevorzugt in einem Ringofen abläuft, optimal mit Temperatur beaufschlagt werden können.

In einer besonderen Ausführungsform werden die erfindungsgemäß erzeugten Faserstäbe erneut gebündelt, wobei das Bündel N einzelne Faserstäbe umfasst mit

$$N = 1 + 3 \cdot ((n+1)!/(n-1)!)$$

mit n: Ordnung, n = 2, 3, ...

Hierdurch ergibt sich der Vorteil, unter zumindest Beibehaltung der bereits sehr hohen Packungsdichte die Auflösung der Optischen Vorrichtung nochmals zu erhöhen.

Der erfindungsgemäß hergestellte Faserstab der Optischen Vorrichtung weist eine annähernd hexagonale Außenkontur auf, da die enthaltenen Lichtleitstäbe eine bevorzugt hexagonale Querschnittsform einnehmen und somit eine größtmögliche Packungsdichte erreicht werden kann.

Zur Herstellung der erfindungsgemäßen Optischen Vorrichtung werden parallele Lichtleitstäbe gleicher Länge gebündelt, wobei die Querschnittsfläche und die Anzahl der Lichtleitstäbe in Bezug auf die Querschnittsfläche einer umgebenden Hülle ausgewählt werden, wobei die gebündelten Lichtleitstäbe durch eine Hülle oder durch eine Hilfsvorrichtung zusammengehalten werden und wobei die gebündelten Lichtleitstäbe einem Ziehprozeß zugeführt werden, bei dem durch Temperaturzuführung die Lichtleitstäbe miteinander verschmolzen werden. Somit wird ein mechanisch fester Faserstab, bestehend aus einer Vielzahl einzelner Lichtleitstäbe, erzeugt.

In einer weiteren Ausführungsform kann das Bündel paralleler Lichtleitstäbe Temperatur und Druck ausgesetzt werden, um beispielsweise eine bestimmte Formgebung zu unterstützen.

In einer besonderen Ausführungsform wird während der Beaufschlagung des Bündels mit Temperatur und/oder Druck dieser Prozeß unter Vakuum- oder Schutzgasatmosphäre ausgeführt, um bestimmte Anforderungen beispielsweise an die Reinheit zu erfüllen.

Vorteilhaft wird der Außendurchmesser D1 eines Lichtleitstabes nach folgender Regel ausgewählt:

$$D1 = (D2-s) / (2 \cdot n+1)$$

mit D1: Außendurchmesser des
Lichtleitstabes
D2: Innendurchmesser des Hüllrohrs
s: Übermaß des Hüllsystems.

Hierdurch wird die optimale Packungsdichte des Bündels für das Ausbilden einer hexagonalen Außengeometrie der Lichtleitstäbe in einem nachfolgenden Prozeßschritt erreicht, wobei die Packungsdichte im Bereich von 60% liegt.

In einem nachfolgenden Prozess wird der Faserstab vorteilhaft in Stabsegmente oder in scheibenförmige Stababschnitte getrennt und als faseroptischer Bildleiter verwendet zu werden.

In einer weiteren vorteilhaften Ausführung werden die Stabsegmente des Faserstabes nochmals erfindungsgemäß einem Bündel- und Ziehprozeß zugeführt. Hierdurch lässt sich ein Multi-Faserstab herstellen, wobei der Durchmesser eines Lichtleitstabes im Multi-Faserstab nicht größer als 100 μm ist und es sich somit im Sinne der Erfindung um einen hochauflösenden faseroptischen Bildleiter handelt. Der auf diese Weise erzeugte Multi-Faserstab weist eine Packungsdichte von mindestens 98%, und besonders bevorzugt von mindestens 99% auf.

Die erfindungsgemäße Optische Vorrichtung kann eingesetzt werden beispielsweise als lichtdurchlässige Abdeckung zum Schutz von witterungsempfindlichen Oberflächen, beispielsweise zum Schutz optischer Instrumente, Uhren oder Sensoren wie etwa CMOS- oder CCD-Sensoren.

Desweiteren kann der erfindungsgemäße hochauflösende optische Bildleiter auch eingesetzt werden zum Transport von Bildern von einem Entstehungsort, der an einem exponierten Ort in Bezug auf beispielsweise hohe Temperaturen oder in einem explosionsgefährdeten Bereich liegt, zu einem anderen Ort, an dem diese Exposition nicht oder nur vermindert vorliegt.

Hierzu können auch beispielsweise chemische Reaktionsgefäße gehören, die eine optische Vorrichtung im Sinne der Erfindung enthalten.

Insbesondere können auch allgemeine optische Vorrichtungen, beispielsweise Periskope oder Endoskope, mit einer Optischen Vorrichtung im Sinne der Erfindung ausgestattet sein.

Anhand der nachfolgenden Figuren werden Anwendungsbeispiele der Erfindung näher erläutert.

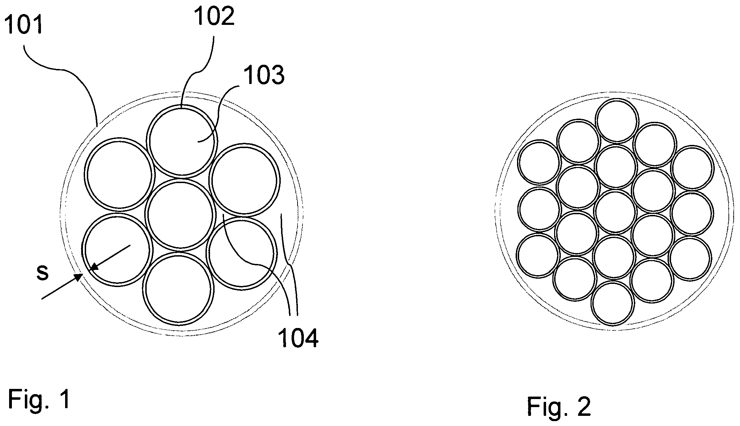

Fig. 1 zeigt den Querschnitt durch eine rohrförmige Hülle, die mit 7 Faserstäben gefüllt ist. Dabei zeigt 101 die umgebende Hülle. 104 zeigt die Hohlräume zwischen den Lichtleitstäben. Der abgebildete Lichtleitstab besteht aus einem Mantelglas (102) sowie einem Kernglas (103). Das Übermaß zwischen der umgebenden Hülle sowie den Lichtleitstäben zeigt s.

Fig. 2 zeigt einen Querschnitt durch eine Hülle mit 19 Faserstäben.

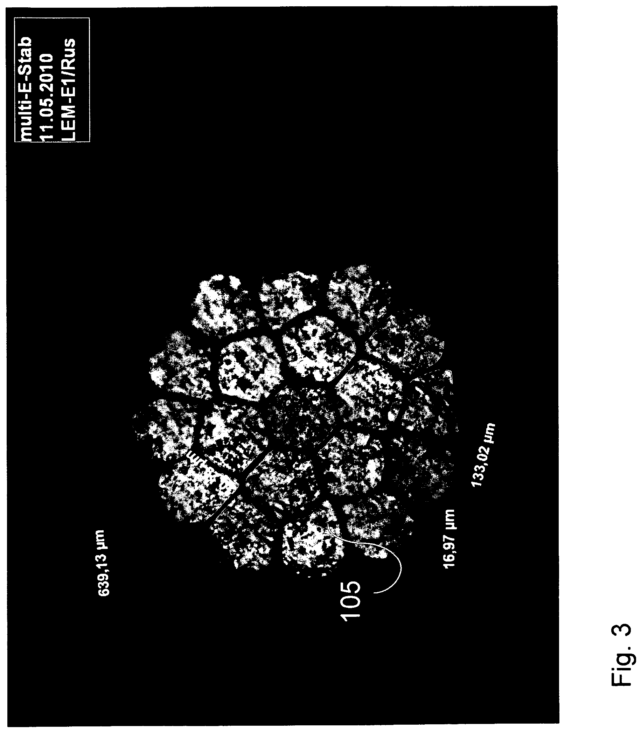

Fig. 3 zeigt den Querschnitt eines Faserstabes, der mit 19 einzelnen Lichtleitstäben gezogen wurde. 105 zeigt hier einen einzelnen Lichtleitstab. Die Schlüsselweite des dargestellten Faserstabes beträgt etwa 640 pm; die Schlüsselweite eines einzelnen Lichtleitstabes innerhalb des Faserstabes beträgt etwa 133 μm.

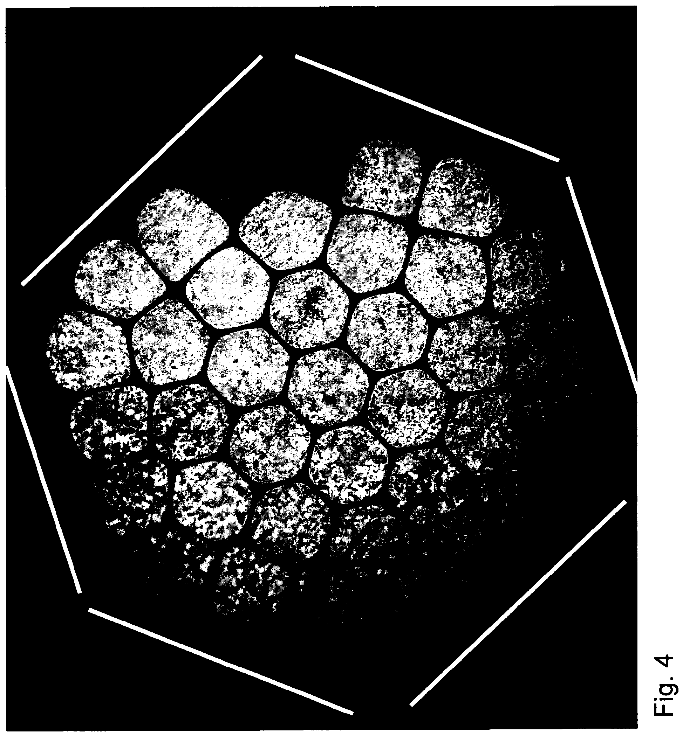

In Fig. 4 ist der Querschnitt eines Faserstabes abgebildet, der mit 37 Lichtleitstäben gezogen wurde. Die abgebildeten weißen Linien sollen die hexagonale Grundstruktur des Faserstabes verdeutlichen.

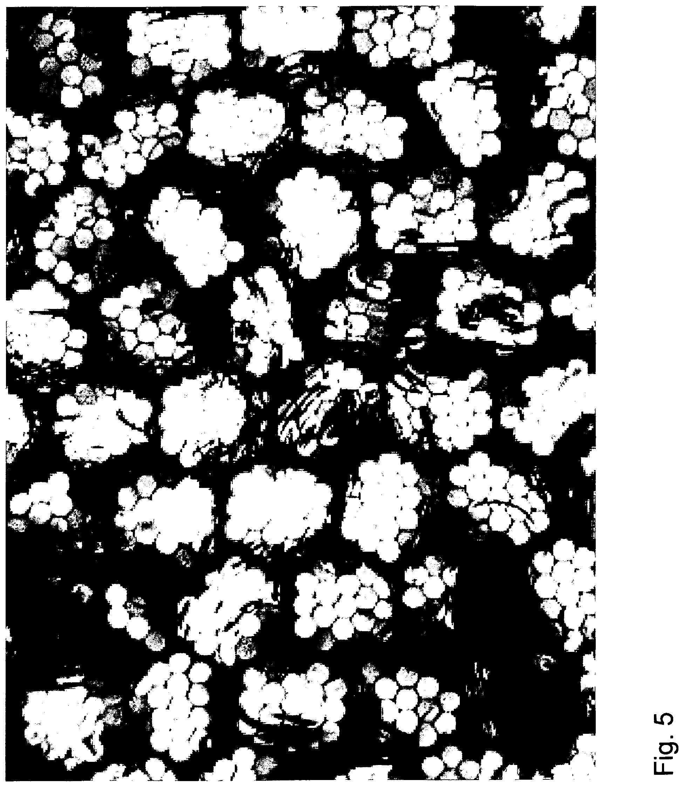

Einen Ausschnitt eines Querschnittes eines erfindungsgemäß hergestellten Multi-Faserstabes zeigt Fig. 5.

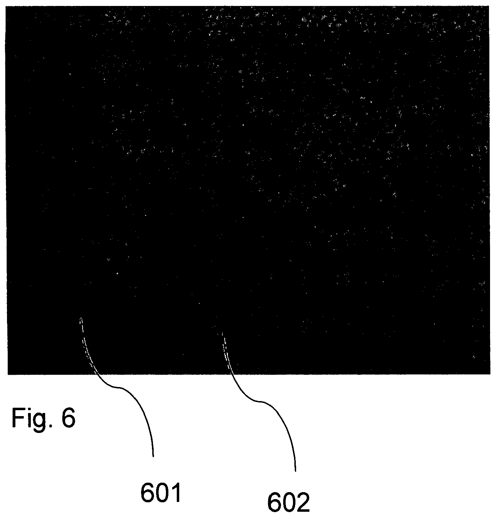

Einen Querschnitt durch einen Multi-Faserstab in idealer Anordnung zeigt Fig. 6. Hierbei zeigt 601 einen einzelnen Lichtleitstab eines Faserstabes sowie 602 das Hüllsystem eines Faserstabes. In Fig. 6 ist eine Vielzahl von Faserstäben mit annähernd hexagonalen Querschnitt zu erkennen.

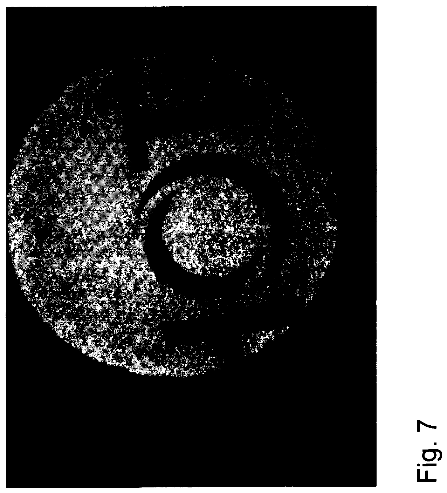

Fig. 7 zeigt eine Bildübertragung durch einen auf diese Weise hergestellten Bildleiter mit einem Durchmesser des Multi-Faserstabes von 20 mm.

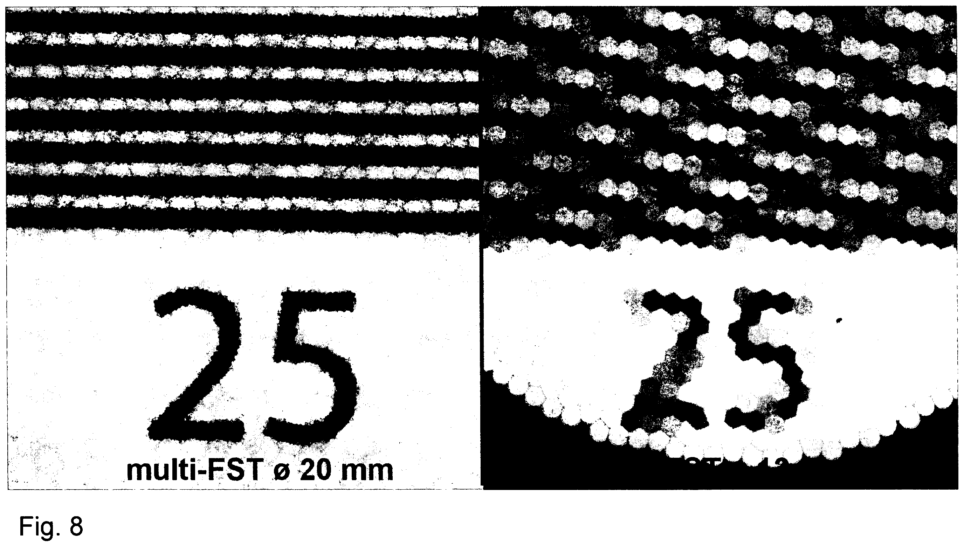

Fig. 8 zeigt einen Vergleich der Übertragungsqualitäten.

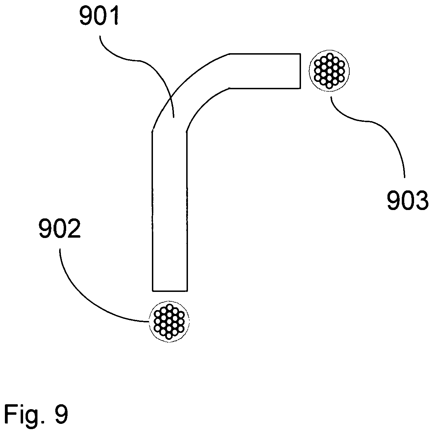

Fig. 9 zeigt eine erfindungsgemäße Optische Vorrichtung, die beispielsweise für Periskope verwendet werden kann. Hierbei ist der Faserstab 901 durch einen zusätzlichen Wärmebehandlungsprozeß gebogen. Die Anordnung der Lichtleitstäbe des Faserstabes ist an beiden Enden identisch (902, 903). Die Qualität der Bildübertragung ist durch das Biegen des Faserstabes nicht beeinflusst.

Ausführungsbeispiel

Im folgenden wird ein erfindungsgemäßes Ausführungsbeispiel zur Herstellung eines faseroptischen Bildleiters dargestellt, wobei hier nur eine mögliche Variante beschrieben wird.

Unter Lichtleitstäben sind Stab-Rohr-Systeme aus Glas zu verstehen, die in der Lage sind, elektromagnetische Wellen im Bereich von 200 nm bis 2 $\mu$m zu übertragen und damit eine Lichttransmission ermöglichen. Lichtleitstäbe bestehen im allgemeinen aus einem Kernglas (103), welches den Stab darstellt, sowie einem Mantelglas (102), welches die Funktion des Rohres aufweist. Hierbei weist das Kernglas einen Brechungsindex auf, der größer ist als der des umgebenden Mantelglases. Durch diesen Aufbau wird eine Übertragung von Licht mittels Reflexion an den Grenzflächen des inneren und des äußeren Glases ermöglicht.

Ein Lichtleitstab weist in der Regel einen runden Querschnitt auf und wird typischerweise aus einem Stab-Rohr-System gezogen, welches im ursprünglichen Zustand einen Außendurchmesser im Bereich von ca. 30 bis 40 mm aufweist. Erfindungsgemäß wird für das Rohr ein Mantelglas ausgewählt, welches eine relativ große Wandstärke im Bereich von größer als 1 mm aufweist.

Der Lichtleitstab wird üblicherweise durch einen Ziehprozess aus dem Stab-Rohr-System hergestellt. Typischerweise weist ein derart hergestellter Lichtleitstab einen Außendurchmesser im Bereich von 0,1 bis 10 mm auf. Der gezogene Lichtleitstab wird nach dem Ziehprozess in stabförmige Abschnitte getrennt.

Der Ziehprozess wird durch das Ziehverhältnis charakterisiert, welches das Verhältnis der Abziehgeschwindigkeit Va in Relation zur Nachschubgeschwindigkeit Vn wiedergibt. Hierbei ist die Abziehgeschwindigkeit größer als die Nachschubgeschwindigkeit.

Die so erzeugten Lichtleitstäbe werden zu Bündeln paralleler Lichtleitstäbe gleicher Länge zusammengefasst, wobei ein Bündel aus mehreren oder auch vielen Hundert einzelnen Lichtleitstäben bestehen kann. Gemäß vorliegender Erfindung sind Bündel von Lichtleitstäben besonders vorteilhaft, die aus 7, 19, 37, 61, 91, usw. einzelnen Lichtleitstäben bestehen. Die das Bündel umgebende Hülle kann ebenfalls ein rohrförmiges Mantelglas sein, wobei hier erfindungsgemäß ein Mantelglas mit einer geringen Wandstärke zu bevorzugen ist, etwa im Bereich von 1 mm oder weniger.

Ein derartiges Bündel aus Lichtleitstäben weist typischerweise einen Außendurchmesser im Bereich von 30 bis 40 mm auf und wird einem weiteren Ziehprozess zugeführt, um einen Faserstab zu erzeugen. Durch den Ziehprozess erhöht sich die Packungsdichte des zugeführten Bündels; desweiteren reduziert sich der Querschnitt. Der so erzeugte Faserstab kann beispielsweise einen äußeren Durchmesser bzw. eine Schlüsselweite im Bereich von bis zu 1 mm aufweisen. Üblicherweise wird der Faserstab in stabförmige oder auch scheibenförmige Abschnitte getrennt.

Um größere Durchmesser des Faserstabes, etwa im Bereich von 20 mm oder größer, zu erhalten, und/oder die Auflösung des Faserstabes zu erhöhen, können mehrere Faserstäbe gleicher Länge erneut nach obiger Methodik parallel gebündelt und einem weiteren Ziehprozeß zugeführt werden.

Anstelle eines Ziehprozesses kann hier auch ein Pressen oder eine Kombination von Ziehen und Pressen stattfinden, wobei die Faserstäbe unter Hinzufügen von Temperatur oder Temperatur und Druck miteinander verschmolzen werden. Diese Prozeßabfolge kann auch mehrfach durchlaufen werden.

Um erfindungsgemäß beispielsweise einen hochauflösenden faseroptischen Bildleiter mit ca. 148.000 Lichtleitstäben herzustellen, können nach diesem Verfahren zunächst 37 Lichtleitstäbe gleicher Länge, die einen Außendurchmesser von etwa 5 mm aufweisen, parallel angeordnet und in einer Hülle mit einem Außendurchmesser von etwa 35 mm gebündelt werden.

Nach Durchlaufen eines Ziehprozesses entsteht ein Faserstab, der eine Schlüsselweite i Bereich von etwa 0,6 mm sowie eine Packungsdichte von etwa 99% aufweist.

In einem weiteren Prozeßschritt werden dann ca. 4.000 auf diese Weise erzeugten annähernd hexagonale Faserstäbe gleicher Länge erneut in einer Hülle parallel zusammengefasst, wodurch diese Konfiguration dann insgesamt ca. 148.000 Lichtleitstäbe aufweist.

In einem anschließenden Ziehprozeß kann mit einem vergleichsweise großen Ziehverhältnis - beispielsweise 1:2 - gearbeitet werden, um einen hochauflösenden Multi-Faserstab mit einer Auflösung im Bereich von weniger als 100 $\mu$m zu erhalten.

Anstelle eines Ziehprozesses kann an dieser Stelle auch ein Prozeß eingesetzt werden, bei dem das Sammelbündel mit Temperatur und Vakuum oder Temperatur und Druck beaufschlagt wird.

Im Falle eines Sammelbündels von Faserstäben mit einem Außendurchmesser von 35 mm kann somit eine hochauflösende optische Vorrichtung umfassend ca. 148.000 Lichtleitstäbe hergestellt werden, die einen Außendurchmesser im Bereich von 20 mm aufweist. Die Packungsdichte dieser Vorrichtung liegt im Bereich von größer als 99% und die Auflösung im Bereich von etwa 60 μm.

**Patentansprüche**

1.  Optische Vorrichtung zur Bildübertragung, insbesondere hochauflösender faseroptischer Bildleiter, zur Übertragung von elektromagnetischer Strahlung im Wellenlängenbereich von 200 nm bis 2 μm, umfassend Lichtleitstäbe mit annähernd hexagonalen Außenkonturen, wobei ein Faserstab durch einen oder mehrere Ziehvorgänge aus gebündelten Lichtleitstäben hergestellt worden ist und eine Packungsdichte von mindestens 98% sowie eine Auflösung von kleiner als 1 mm, vorzugsweise von kleiner als 100 μm aufweist, wobei Lichtleitstäbe zu Bündeln paralleler Lichtleitstäbe gleicher Länge zusammengefasst und einem Ziehprozess zugeführt werden, um einen Faserstab mit annähernd hexagonalen Außenkonturen zu erzeugen, und wobei die Bündel der Lichtleitstäbe N einzelne Lichtleitstäbe umfassen mit $N = 1 + 3 \cdot ((n+1)! / (n-1)!)$ mit n: Ordnung, n = 2, 3, ....

2.  Optische Vorrichtung nach Anspruch 1, wobei mehrere Faserstäbe gleicher Länge erneut parallel gebündelt und einem weiteren Ziehprozeß oder einem Pressen oder einer Kombination von Ziehen und Pressen zugeführt werden, wobei die Faserstäbe unter Beaufschlagen mit Temperatur oder Temperatur und Druck miteinander verschmolzen sind.

3.  Optische Vorrichtung nach vorstehenden Ansprüchen, wobei die Bündel der Lichtleitstäbe in einer rohrförmigen Umhüllung eingefasst sind.

4.  Optische Vorrichtung nach vorstehenden Ansprüchen, wobei Sammelbündel aus Faserstäben gebildet sind und die Anzahl N der Faserstäbe der Regel

$$N = 1 + 3 \cdot ((n+1)!/(n-1)!)$$

mit n: Ordnung, n = 1, 2, 3,
folgt.

5.  Verfahren zur Herstellung einer optischen Vorrichtung nach einem der vorstehenden Ansprüche mit folgenden Schritten

    - parallele Lichtleitstäbe gleicher Länge mit rundem Querschnitt werden gebündelt, wobei die Bündel der Lichtleitstäbe N einzelne Lichtleitstäbe umfassen mit $N = 1 + 3 \cdot ((n+1)!/(n-1)!)$ mit n: Ordnung, n = 2, 3, ..., und wobei die Querschnittsfläche und die Anzahl der Lichtleitstäbe in Bezug auf die Querschnittsfläche einer umgebenden rohrförmigen Hülle ausgewählt werden
    - die gebündelten Lichtleitstäbe werden durch die rohrförmige Hülle zusammengehalten,
    - die gebündelten Lichtleitstäbe werden einem Ziehprozeß zugeführt, bei dem durch Temperaturzuführung die Lichtleitstäbe miteinander verschmolzen werden, um einen Faserstab zu erzeugen, wobei eine Verformung der Außenkontur der Lichtleitstäbe derart erfolgt, dass die einzelnen Lichtleitstäbe im Wesentlichen eine hexagonale Außenkontur annehmen, und wobei der Faserstab selbst eine annähernd hexagonale Außenkontur annimmt und eine Packungsdichte von mindestens 98% vorliegt.

6.  Verfahren nach vorstehendem Anspruch, wobei Faserstäbe gleicher Länge erneut parallel gebündelt und einem weiteren Ziehprozeß oder einem Pressen oder einer Kombination von Ziehen und Pressen zugeführt werden, wobei die Faserstäbe unter Beaufschlagen mit Temperatur oder Temperatur und Druck miteinander verschmolzen werden.

7.  Verfahren nach Anspruch 5 oder 6, wobei der Außendurchmesser D1 des Lichtleitstabes im Schritt des Anspruchs 2 nach folgender Regel gewählt wird:

$$D1 = (D2-s) / (2 \cdot n+1)$$

mit D1: Außendurchmesser des Lichtleitstabes
D2: Innendurchmesser des Hüllrohrs
s: Übermaß des Hüllsystems.

8. Verfahren nach mindestens einem der vorstehenden Ansprüche 5 oder 7, **dadurch gekennzeichnet, dass** der auf diese Weise erzeugter Faserstab eine Packungsdichte von größer 98% aufweist.

9. Verfahren nach einem der vorstehenden Ansprüche 5 bis 8, **dadurch gekennzeichnet, dass** der Ziehprozeß unter Vakuum- oder Schutzgasatmosphäre stattfindet.

10. Optische Vorrichtung, insbesondere hochauflösender faseroptischer Bildleiter, **gekennzeichnet durch** deren Herstellbarkeit mit einem Verfahren nach einem der vorstehenden Ansprüche 5 bis 8.

11. Lichtdurchlässige Abdeckung, insbesondere zum Schutz von witterungsempfindlichen Oberflächen, zum Schutz von optischen Sensoren wie CMOS-Sensoren oder CCD-Sensoren umfassend eine optische Vorrichtung nach einem der Ansprüche von 1 bis 5 und von 10.

12. Instrument, insbesondere Uhren umfassend eine optische Vorrichtung nach einem der Ansprüche von 1 bis 5 und von 10.

13. Chemisches Reaktionsgefäß umfassend eine optische Vorrichtung nach einem der Ansprüche von 1 bis 5 und von 10.

14. Medizintechnisches Endoskop umfassend eine optische Vorrichtung nach einem der Ansprüche von 1 bis 5 und von 10.


## Claims

1. An optical device for image transmission, in particular a high-resolution fiber optic image guide for transmitting electromagnetic radiation in a range of wavelengths from 200 nm to 2 $\mu$m, comprising light conducting rods that have approximately hexagonal outer contours; wherein a fiber rod has been produced by one or more drawing operations from bundled light conducting rods and has a packing density of at least 98 % and a resolution of less than 1 mm, preferably less than 100 $\mu$m, wherein light conducting rods are combined to form bundles of parallel light conducting rods of equal length and are subjected to a drawing process to produce a fiber rod having approximately hexagonal outer contours; and wherein the bundles of light conducting rods comprise N individual light conducting rods, with N = 1 + 3 · ((n+1)!/(n-1)!), with n: order; n = 2, 3, ....

2. The optical device according to claim 1, wherein a plurality of fiber rods of the same length is again combined to form a parallel bundle and is subjected to a further drawing process or to a compression or a combination of drawing and compression, wherein the fiber rods having been fused together by being exposed to heat or heat and pressure.

3. The optical device according to any one of the preceding claims, wherein the bundles of light conducting rods are enclosed in a tubular sheath.

4. The optical device according to any one of the preceding claims, wherein aggregate bundles are formed from fiber rods, and wherein the number N of fiber rods complies to the rule of:

$$N = 1 + 3 \cdot ((n+1)!/(n-1)!)$$

wherein n: order; n = 1, 2, 3.

5. A method for producing an optical device according to any one of the preceding claims, comprising the following steps:

- parallel light conducting rods of equal length and of a round cross-sectional shape are bundled, wherein the bundles of light conducting rods comprise N individual light conducting rods, with

$$N = 1 + 3 \cdot ((n+1)!/(n-1)!),$$

with n: order; n = 2, 3, ...; and wherein the cross-sectional area and the number of light conducting rods are selected with respect to the cross-sectional area of a surrounding tubular sheath;
- the bundled light conducting rods are held together by the tubular sheath;
- the bundled light conducting rods are subjected to a drawing process during which the light conducting rods are fused together by heat supply so as to produce a fiber rod, whereby a deformation of the outer contour of the light conducting rods occurs such that the individual light conducting rods assume an essentially hexagonal outer contour, and wherein the fiber rod itself assumes an approximately hexagonal outer contour and has a packing density of at least 98 %.

6. The method according to the preceding claim, wherein fiber rods of the same length are again combined to form a parallel bundle and are subjected to a further drawing process or to a compression or a combination of drawing and compression, whereby the fiber rods are fused together by being subjected to heat or heat and pressure.

7. The method according to claim 5 or 6, wherein the outer diameter D1 of the light conducting rod is selected in the step of claim 2 according to the following rule:

$$D1 = (D2-s)/(2 \cdot n+1);$$

with D1: outer diameter of light conducting rod;
D2: inner diameter of sheathing tube;
s: oversize of sheathing system.

8. The method according to at least one of the preceding claims 5 or 7, **characterized in that** the so produced fiber rod has a packing density of more than 98 %.

9. The method according to any one of the preceding claims 5 to 8, **characterized in that** the drawing process is performed under vacuum or in an inert gas atmosphere.

10. An optical device, in particular a high-resolution fiber optic image guide, **characterized by** being producible by a method according to any one of the preceding claims 5 to 8.

11. A light-transmissive cover, in particular for protecting weather-sensitive surfaces, for protecting optical sensors such as CMOS sensors or CCD sensors, comprising an optical device according to any one of claims 1 to 5 and 10.

12. An instrument, in particular a clock, comprising an optical device according to any one of claims 1 to 5 and 10.

13. A chemical reaction vessel, comprising an optical device according to any one of claims 1 to 5 and 10.

14. A medical endoscope, comprising an optical device according to any one of claims 1 to 5 and 10.


**Revendications**

1. Dispositif optique de transmission d'image, en particulier guide d'image à fibre optique à haute résolution, pour la transmission d'un rayonnement électromagnétique dans la plage de longueurs d'onde allant de 200 nm à 2 $\mu$m, comprenant des barres guidant la lumière avec des contours extérieurs approximativement hexagonaux, dans lequel une barre de fibres a été fabriquée via un ou plusieurs processus d'étirage à partir de barres guidant la lumière rassemblées en faisceau et présente une densité de tassement d'au moins 98 % ainsi qu'une résolution inférieure à 1 mm, de préférence inférieure à 100 $\mu$m, dans lequel des barres guidant la lumière sont regroupées en faisceaux de barres guidant la lumière parallèles de même longueur et soumises à un processus d'étirage pour produire une barre de fibres avec des contours extérieurs approximativement hexagonaux, et dans lequel les faisceaux des barres guidant la lumière comprennent N barres guidant la lumière individuelles avec N=1+3·((n+1)!/(n-1)!) où n : ordre, n = 2, 3, ....

2. Dispositif optique selon la revendication 1, dans lequel plusieurs barres de fibres de même longueur sont à nouveau rassemblées parallèlement en faisceau et soumises à un autre processus d'étirage ou à un pressage ou à une combinaison d'étirage et de pressage, dans lequel les barres de fibres sont fondues ensemble sous l'influence de la température ou de la température et de la pression.

3. Dispositif optique selon les revendications précédentes, dans lequel les faisceaux des barres guidant la lumière sont enchâssés dans un gainage tubulaire.

4. Dispositif optique selon les revendications précédentes, dans lequel des faisceaux assembleurs sont formés de barres de fibres et le nombre N des barres de fibres obéit à la règle N=1+3·((n+1)!/(n-1)!) où n : ordre, n = 1, 2, 3.

5. Procédé de fabrication d'un dispositif optique selon l'une quelconque des revendications précédentes avec les étapes suivantes :

- des barres guidant la lumière parallèles de même longueur à section transversale circulaire sont rassemblées en faisceau, où les faisceaux des barres guidant la lumière comprennent N barres guidant la lumière individuelles avec N=1+3·((n+1) ! / (n-1)!) où n : ordre, n = 2, 3, ..., et où la surface transversale et le nombre des barres guidant la lumière sont choisis en fonction de la surface transversale d'une gaine tubulaire environnante,
- les barres guidant la lumière rassemblées en faisceau sont maintenues ensemble grâce à la gaine tubulaire,
- les barres guidant la lumière rassemblées en faisceau sont soumises à un processus d'étirage par l'intermédiaire duquel, via une amenée de température, les barres guidant la lumière sont fondues entre elles pour produire une barre de fibres, où un façonnage du contour extérieur des barres guidant la lumière s'effectue de telle sorte que les barres guidant la lumière individuelles adoptent un contour extérieur essentiellement hexagonal, et où la barre de fibres elle-même adopte un contour extérieur approximativement hexagonal et une densité de tassement d'au moins 98 % se présente.

6. Procédé selon la revendication précédente, dans lequel des barres de fibres de même longueur sont à nouveau rassemblées parallèlement en faisceau et soumises à un autre processus d'étirage ou à un pressage ou à une combinaison d'étirage et de pressage, où les barres de fibres sont fondues ensemble sous l'influence de la température ou de la température et de la pression.

7. Procédé selon la revendication 5 ou 6, dans lequel le diamètre extérieur D1 de la barre guidant la lumière dans l'étape de la revendication 2 est choisi dans le respect de la règle suivante :

$$D1 = (D2-s)/(2 \cdot n+1)$$

où D1 : diamètre extérieur de la barre guidant la lumière,
D2 : diamètre intérieur du tube de gainage,
s : surdimensionnement du système de gainage.

8. Procédé selon au moins une des revendications précédentes 5 ou 7, **caractérisé en ce que** la barre de fibres fabriquée de cette façon présente une densité de tassement supérieure à 98 %.

9. Procédé selon l'une quelconque des revendications précédentes 5 à 8, **caractérisé en ce que** le processus d'étirage a lieu dans une atmosphère sous vide ou sous protection gazeuse.

10. Dispositif optique, en particulier guide d'image à fibre optique à haute résolution, **caractérisé par** sa fabricabilité avec un procédé selon l'une quelconque des revendications précédentes 5 à 8.

11. Revêtement translucide, en particulier pour la protection de surfaces sensibles aux conditions météorologiques, pour la protection de capteurs optiques tels des capteurs CMOS ou des capteurs CCD comprenant un dispositif optique selon l'une quelconque des revendications 1 à 5 et de 10.

**12.** Instrument, en particulier horloges, comprenant un dispositif optique selon l'une quelconque des revendications 1 à 5 et de 10.

**13.** Récipient de réaction chimique comprenant un dispositif optique selon l'une quelconque des revendications 1 à 5 et de 10.

**14.** Endoscope médico-technique comprenant un dispositif optique selon l'une quelconque des revendications 1 à 5 et de 10.

Fig. 2

Fig. 1

Fig. 3

Fig. 4

Fig. 5

Fig. 6

601

602

Fig. 7

multi-FST ø 20 mm

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009004159 A1
- DE 10059371 A1